(19) **Europäisches Patentamt**
**European Patent Office**
**Office européen des brevets**

(11) **EP 4 604 540 A1**

(12) **EUROPEAN PATENT APPLICATION**
published in accordance with Art. 153(4) EPC

(43) Date of publication:
**20.08.2025 Bulletin 2025/34**

(21) Application number: **23877689.2**

(22) Date of filing: **12.10.2023**

(51) International Patent Classification (IPC):
*H04N 19/60* (2014.01)    *H04N 19/11* (2014.01)
*H04N 19/132* (2014.01)   *H04N 19/70* (2014.01)
*H04N 19/176* (2014.01)

(52) Cooperative Patent Classification (CPC):
**H04N 19/11; H04N 19/132; H04N 19/176;**
**H04N 19/60; H04N 19/70**

(86) International application number:
**PCT/KR2023/015682**

(87) International publication number:
**WO 2024/080766 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.10.2022 US 202263415637 P**

(71) Applicant: **LG Electronics Inc.**
**Yeongdeungpo-gu**
**Seoul 07336 (KR)**

(72) Inventors:
• **LIM, Jaehyun**
  **Seoul 06772 (KR)**
• **CHOI, Jungah**
  **Seoul 06772 (KR)**
• **ZHAO, Jie**
  **Seoul 06772 (KR)**
• **KIM, Seung Hwan**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD ON BASIS OF NON-SEPARABLE TRANSFORM, METHOD FOR TRANSMITTING BITSTREAM, AND RECORDING MEDIUM FOR STORING BITSTREAM**

(57)    Provided are an image encoding/decoding method, a method for transmitting a bitstream, and a computer-readable recording medium for storing a bitstream. An image decoding method according to the present disclosure is an image decoding method performed by an image decoding apparatus, the method comprising the steps of: determining a prediction mode of a current block; determining whether the prediction mode of the current block is a predetermined prediction mode; and converting residual samples for the current block, wherein the predetermined prediction mode comprises at least one of a matrix based intra prediction (MIP) mode or a mixed prediction mode, and the mixed prediction mode is a mode that derives a prediction block on the basis of surrounding samples.

FIG. 15

**Description**

[Technical Field]

The present disclosure relates to a method for encoding/decoding an image, a method for transmitting a bitstream and a recording medium for storing a bitstream, and relates to a method for adaptively performing non-separable primary transform.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to provide a method for configuring a relationship between non-separable primary transform and other coding tools.

In addition, the present disclosure is to provide a method for not applying non-separable primary transform for a predetermined prediction mode.

In addition, the present disclosure is to provide a method for adaptively applying non-separable primary transform for a predetermined prediction mode.

In addition, the present disclosure is to provide a non-transitory computer-readable recording medium for storing a bitstream generated by the image encoding method according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream which is generated by the image encoding method according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure is an image decoding method performed by an image decoding device, and may be an image decoding method that includes determining a prediction mode of a current block; determining whether the prediction mode of the current block is a predetermined prediction mode; and transforming residual samples for the current block, wherein the predetermined prediction mode includes at least one of a matrix based intra prediction (MIP) mode or a mixed prediction mode, and the mixed prediction mode is a mode that derives a prediction block based on neighboring samples.

An image encoding method according to another aspect of the present disclosure is an image encoding method performed by an image encoding device, and may be an image encoding method that includes determining a prediction mode of a current block; determining whether the prediction mode of the current block is a predetermined prediction mode; and transforming residual samples for the current block, wherein the predetermined prediction mode includes at least one of a matrix based intra prediction (MIP) mode or a mixed prediction mode, and the mixed prediction mode is a mode that derives a prediction block based on neighboring samples.

A computer-readable recording medium according to another aspect of the present disclosure may store a bitstream generated by the image encoding method or device of the present disclosure.

A transmission method according to another aspect of the present disclosure may transmit a bitstream generated by the image encoding method or device of the present disclosure.

The features briefly summarized above for the present disclosure are merely an exemplary aspect of a detailed description of the present disclosure described below, and do not limit the scope of the present disclosure.

[Advantageous Effects]

According to the present disclosure, an image encoding/decoding method and apparatus with improved encoding/decoding efficiency may be provided.

In addition, according to the present disclosure, non-separable transform may be utilized in performing primary transform.

In addition, according to the present disclosure, the bit amount required to signal information about non-separable primary transform may be reduced, thereby improving bit efficiency.

In addition, according to the present disclosure, a non-transitory computer-readable recording medium for storing a bitstream generated by the image encoding method according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method for transmitting a bitstream generated by the image encoding method may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a diagram for describing a LFNST application method.

FIG. 5 is a flowchart representing a method for encoding an image based on intra prediction.

FIG. 6 is a diagram schematically representing an intra predictor of an image encoding device.

FIG. 7 is a flowchart representing a method for decoding an image based on intra prediction.

FIG. 8 is a diagram schematically representing an intra predictor of an image encoding device.

FIG. 9 is a diagram for describing template based intra mode derivation (TIMD).

FIG. 10 is a diagram for describing a method for constructing a Histogram of Gradient (HoG) in decoder-side intra mode derivation (DIMD).

FIG. 11 is a diagram for describing a method for constructing a prediction block in applying DIMD.

FIG. 12 is a diagram for describing a method for applying DIMD to a chroma block.

FIGS. 13 and 14 are a diagram for describing combined inter and intra prediction (CIIP).

FIG. 15 is a flowchart representing an image encoding/decoding method according to an embodiment of the present disclosure.

FIG. 16 is a flowchart representing an image encoding/decoding method according to another embodiment of the present disclosure.

FIG. 17 is a flowchart representing an image encoding/decoding method according to an embodiment of the present disclosure.

FIG. 18 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

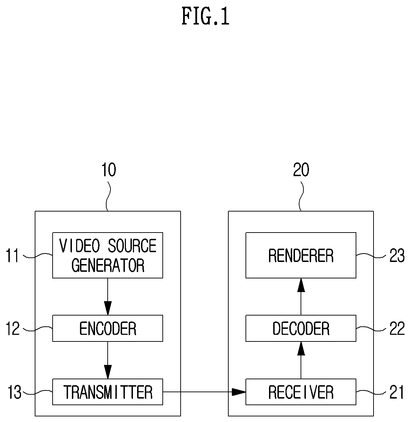

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoding apparatus 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

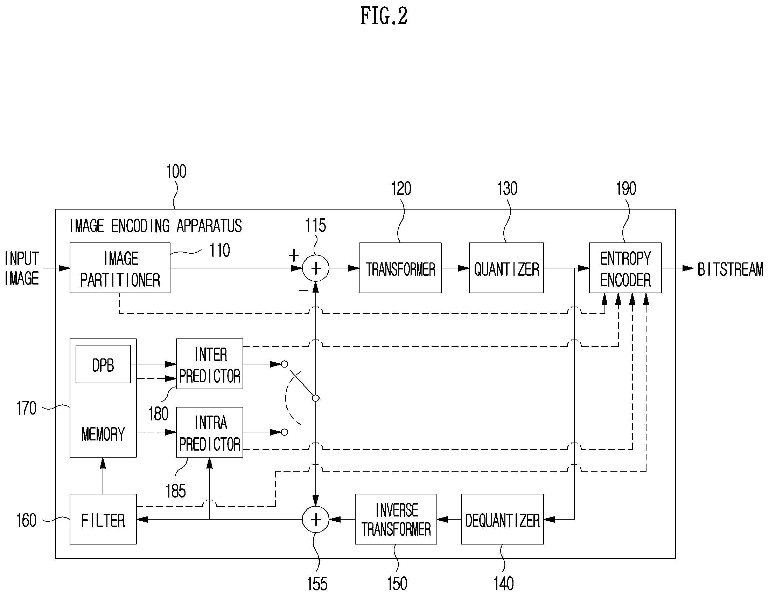

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

### Overview of the image decoding apparatus

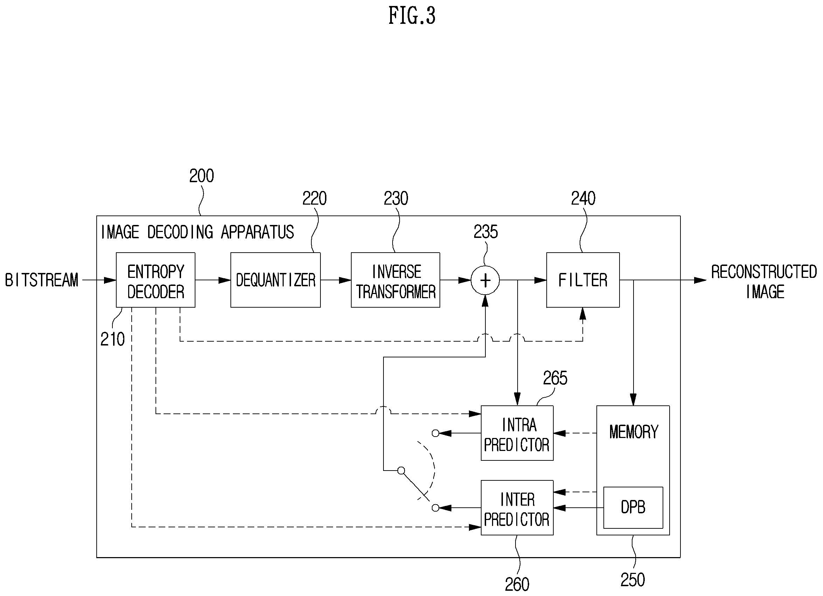

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment.

Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Overview of Transform/Inverse Transform

As described above, an encoding device may derive a residual block (residual samples) based on a predicted block (prediction samples) through intra/inter/IBC prediction, etc., and may derive quantized transform coefficients by applying transform and quantization to derived residual samples. Information on quantized transform coefficients (residual information) may be included in a residual coding syntax and output in the form of a bitstream after encoding. A decoding device may obtain information on the (quantized) transform coefficients (residual information) from the bitstream and decode it to derive quantized transform coefficients. A decoding device may derive residual samples through dequantization/inverse transform based on quantized transform coefficients. As described above, at least one of quantization/dequantization and/or transform/inverse transform above may be omitted. When the quantization/dequantization is omitted, the quantized transform coefficient may be called a transform coefficient. When the transform/inverse transform is omitted, the transform coefficient may be called a coefficient or a residual coefficient, or may still be called a transform coefficient for the consistency of expression. Whether to omit the transform/inverse transform may be signaled based on transform_skip_flag.

In addition, in the present disclosure, a quantized transform coefficient and a transform coefficient may be referred to as a transform coefficient and a scaled transform coefficient, respectively. In this case, residual information may include information about transform coefficient(s), and information about the transform coefficient(s) may be signaled through a residual coding syntax. Transform coefficients may be derived based on the residual information (or information about the transform coefficient(s)), and scaled transform coefficients may be derived through inverse transform (scaling) for the transform coefficients. Residual samples may be derived based on inverse transform (transform) for the scaled transform coefficients. This may be applied/expressed in other parts of the present disclosure as well.

The transform/inverse transform may be performed based on transform kernel(s). For example, according to the present disclosure, a multiple transform selection (MTS) scheme may be applied. In this case, some of multiple transform kernel sets may be selected and applied to a current block. A transform kernel may be called various terms such as a transform matrix, a transform type, etc. For example, a transform kernel set may represent a combination of a vertical transform kernel (a vertical transform kernel) and a horizontal transform kernel (a horizontal transform kernel).

For example, MTS index information (or, a mts_idx syntax element) may be generated/encoded in an encoding device and signaled to a decoding device in order to indicate one of the transform kernel sets. For example, a transform kernel set according to the value of MTS index information may be derived as in Table 1.

[Table 1]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

Table 1 shows tyTypeHor and trTypeVer values according to tu_mts_idx[ x0 ][ y0 ].

The transform kernel set may also be determined based on, for example, cu_sbt_horizontal_flag and cu_sbt_pos_flag as in Table 2.

[Table 2]

| cu_sbt_horizontal_flag | cu_sbt_pos_flag | trTypeHor | trTypeVer |
|---|---|---|---|
| 0 | 0 | 2 | 1 |
| 0 | 1 | 1 | 1 |
| 1 | 0 | 1 | 2 |
| 1 | 1 | 1 | 1 |

Table 2 shows tyTypeHor and trTypeVer values according to cu_sbt_horizontal_flag and cu_sbt_pos_flag. Here, cu_sbt_horizontal_flag equal to 1 may represent that a current coding unit is horizontally partitioned into two transform blocks. In contrast, cu_sbt_horizontal_flag equal to 0 may represent that a current coding unit is vertically partitioned into two transform blocks. In addition, cu_sbt_pos_flag equal to 1 may represent that syntax elements tu_cbf_luma, tu_cbf_cb and tu_cbf_cr of a first transform unit in a current coding unit do not exist in a bitstream. In contrast, cu_sbt_pos_flag equal to 0 may represent that syntax elements tu_cbf_luma, tu_cbf_cb and tu_cbf_cr of a second transform unit in a current coding unit do not exist in a bitstream.

Meanwhile, in Table 1 and Table 2, trTypeHor may represent a horizontal transform kernel, and trTypeVer may represent a vertical transform kernel. 0, the value of trTypeHor/trTypeVer, may represent DCT2, 1, the value of trTypeHor/trTypeVer, may represent DST7, and 2, the value of trTypeHor/trTypeVer, may represent DCT8. However, this is an example, and another value may be mapped to another DCT/DST by promise.

Table 3 illustratively represents basis functions for the above-described DCT2, DCT8 and DST7.

[Table 3]

| Transform Type | Basis function $T_i(j)$, $i,j = 0, 1,..., N\text{-}1$ |
|---|---|
| DCT-II | $T_i(j) = \omega_0 \cdot \sqrt{\dfrac{2}{N}} \cdot \cos\left(\dfrac{\pi \cdot i \cdot (2j+1)}{2N}\right)$ where $\omega_0 = \begin{cases} \sqrt{\dfrac{2}{N}} & i = 0 \\ 1 & i \neq 0 \end{cases}$ |
| DCT-VIII | $T_i(j) = \sqrt{\dfrac{4}{2N+1}} \cdot \cos\left(\dfrac{\pi \cdot (2i+1) \cdot (2j+1)}{4N+2}\right)$ |
| DST-VII | $T_i(j) = \sqrt{\dfrac{4}{2N+1}} \cdot \sin\left(\dfrac{\pi \cdot (2i+1) \cdot (j+1)}{2N+1}\right)$ |

In the present disclosure, the MTS-based transform is applied as primary transform, and secondary transform may be further applied. The secondary transform may be applied only to coefficients in the top-left wxh region of a coefficient block to which the primary transform is applied, and may be called reduced secondary transform (RST). For example, w and/or h above may be 4 or 8. In transform, the primary transform and the secondary transform may be sequentially applied to a residual block, and in inverse transform, inverse secondary transform and inverse primary transform may be sequentially applied to transform coefficients. The secondary transform (RST transform) may be called low frequency coefficients transform (LFCT) or low frequency non-separable transform (LFNST). The inverse secondary transform may be called inverse LFCT or inverse LFNST.

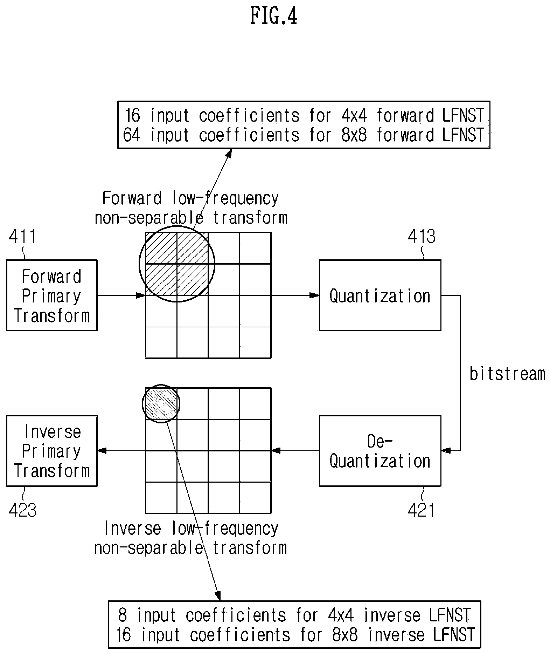

FIG. 4 is a diagram for describing a LFNST application method.

Referring to FIG. 4, LFNST may be applied between forward primary transform 411 and quantization 413 on an encoder side and between dequantization 421 and inverse primary transform (or, primary inverse transform) 423 on a decoder side.

In LFNST, 4x4 non-separable transform or 8x8 non-separable transform may be (selectively) applied according to a block size. For example, 4x4 LFNST may be applied to relatively small blocks (i.e., min (width, height) < 8), and 8x8 LFNST may be applied to relatively large blocks (i.e., min (width, height) > 4). In FIG. 4, it is illustratively shown that 4x4 forward LFNST is applied to 16 input coefficients and 8x8 forward LFNST is applied to 64 input coefficients. In addition, in FIG. 4, it is illustratively shown that 4x4 inverse LFNST may be applied to 8 input coefficients and 8x8 inverse LFNST may be applied to 16 input coefficients.

In LFNST, a total of 4 transform sets and 2 non-separable transform matrices (kernels) for each transform set may be used. Mapping from an intra prediction mode to a transform set may be predefined as in Table 4.

[Table 4]

| IntraPredMode | Tr. set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |
| 24 <= IntraPredMode <= 44 | 3 |
| 45 <= IntraPredMode <= 55 | 2 |
| 56 <= IntraPredMode<= 80 | 1 |
| 81 <= IntraPredMode<= 83 | 0 |

Referring to Table 4, when 3 CCLM modes having 81 to 83 prediction mode numbers (i.e., $81 \leq$ IntraPredMode$\leq 83$) are used for a current block, transform set 0 may be selected for a current chroma block. For each transform set, a selected non-separable secondary transform candidate may be additionally designated by an explicitly signaled LFNST index. A corresponding index may be signaled in a bitstream once per Intra CU after transform coefficients.

Meanwhile, the transform/inverse transform may be performed in a unit of a CU or a TU. In other words, the transform/inverse transform may be applied to residual samples within a CU or residual samples within a TU. A CU size and a TU size may be the same, or a plurality of TUs may exist within a CU region. Meanwhile, a CU size may generally represent a luma component (sample) CB size. A TU size may generally represent a luma component (sample) TB size. A chroma component (sample) CB or TB size may be derived based on a luma component (sample) CB or TB size according to a component ratio according to a color format (a chroma format, e.g., 4:4:4, 4:2:2, 4:2:0, etc.). The TU size may be derived based on maxTbSize. For example, when the CU size is larger than the maxTbSize, a plurality of TU(TB)s of the maxTbSize may be derived from the CU, and transform/inverse transform may be performed in a unit of the TU(TB). The maxTbSize may be considered in determining whether to apply various intra prediction types such as ISP, etc. Information about the maxTbSize may be determined in advance, or may be generated and encoded in an encoding device and signaled to a decoding device.

As described above, transform may be applied to residual blocks. This is to decorrelate residual blocks as much as possible, concentrate coefficients on a low frequency, and generate a zero tail at the end of a block. In the JEM software, a transform part includes two main functions, i.e., core transform and secondary transform. Core transform consists of discrete cosine transform (DCT) and discrete sine transform (DST) transform families applied to all rows and columns of a residual block. Afterwards, secondary transform may be additionally applied to the top-left corner of the output of core transform. Similarly, inverse transform may be applied in the order of secondary inverse transform and core inverse transform. Specifically, secondary inverse transform may be applied to the top-left corner of a coefficient block. Afterwards, core inverse transform is applied to the rows and columns of the output of secondary inverse transform. Core transform/inverse transform may be referred to as primary transform/inverse transform.

**Overview of Intra Prediction**

Hereinafter, intra prediction according to the present disclosure will be described.

Intra prediction may refer to a prediction method which generates prediction samples for the current block based on reference samples within the picture to which the current block belongs (hereinafter, the current picture). When intra prediction is applied to the current block, neighboring reference samples to be used for intra prediction of the current block may be derived. The neighboring reference samples of the current block may include a total of $2 \times nH$ samples neighboring/adjacent to the left boundary and neighboring the bottom-left of the current block of $nW \times nH$ size, a total of $2 \times nW$ samples adjacent to the top boundary and neighboring the top-right of the current block, and one sample neighboring the top-left of the current block. Alternatively, the neighboring reference samples of the current block may include top neighboring samples of multiple columns and left neighboring samples of multiple rows. Additionally, the neighboring reference samples of the current block may include a total of nH samples neighboring a right boundary of the current block of a size of nWxnH, a total of nW samples neighboring a bottom boundary of the current block, and one sample neighboring a bottom-right of the current block.

However, some of the neighboring reference samples of the current block may not yet be decoded or may not be available. In this case, the image decoding apparatus 200 may construct the neighboring reference samples for prediction by substituting the unavailable samples with available samples. Alternatively, neighboring reference samples for prediction may be constructed through interpolation of the available samples.

When neighboring reference samples are derived, (i) prediction sample may be derived based on the average or interpolation of the neighboring reference samples of the current block, and (ii) prediction sample may be derived based on reference sample located in a specific (prediction) direction for prediction sample among the neighboring reference samples of the current block. Case (i) may be referred to as a non-directional mode or a non-angular mode, and case (ii) may be referred to as a directional mode or an angular mode.

Additionally, the prediction sample may be generated through interpolation between a first neighboring sample located in the prediction direction of the intra prediction mode of the current block and a second neighboring sample located in the opposite direction based on the prediction target sample of the current block among the neighboring reference samples. The above-described case may be referred to as linear interpolation intra prediction (LIP).

Additionally, chroma prediction samples may be generated based on luma samples using a linear model. This case may be called Linear Model (LM) mode.

Additionally, a temporary prediction sample of the current block may be derived based on filtered neighboring reference samples, and a prediction sample of the current block may be derived by calculating a weighted sum of at least one of a reference sample derived according to the intra prediction mode among the conventional neighboring reference samples, i.e. unfiltered neighboring reference samples, and the temporary prediction sample. This case is referred to as Position-dependent intra prediction (PDPC).

Additionally, a reference sample line with the highest prediction accuracy among the multiple neighboring reference sample lines of the current block may be selected, and a prediction sample may be derived using a reference sample located in the prediction direction in the corresponding line. In this case, information about the used reference sample line (i.e., intra_luma_ref_idx) may be encoded and signaled in the bitstream. In this case, it is referred to as multi-reference line intra prediction (MRL) or MRL-based intra prediction. When MRL is not applied, reference samples may be derived from a reference sample line directly adjacent to the current block, and in this case, information about the reference sample line may not be signaled.

Additionally, the current block may be divided into vertical or horizontal subpartitions, and intra prediction may be performed based on the same intra prediction mode for each subpartition. In this case, neighboring reference samples for intra prediction may be derived for each subpartition unit. In other words, the reconstructed sample of the previous subpartition in the encoding/decoding order may be used as the neighboring reference sample of the current subpartition. In this case, the intra prediction mode for the current block is applied identically to the subpartitions, and the neighboring reference sample are derived and used for each subpartition unit, thereby intra prediction performance may be improved in some cases. This prediction method is referred to as intra sub-partitions (ISP) or ISP-based intra prediction.

The intra prediction methods described above may be referred to by various terms, such as intra prediction type or additional intra prediction mode, to distinguish them from directional or non-directional intra prediction mode. For example, the intra prediction method (i.e., intra prediction type or additional intra prediction mode, etc.) may include at least one of the above-described LIP, LM, PDPC, MRL, or ISP. A general intra prediction method that excludes specific intra prediction type such as the LIP, the LM, the PDPC, the MRL, the ISP, etc. may be referred to as a normal intra prediction type. The normal intra prediction type may be generally applied when the specific intra prediction type described above is not used, and prediction may be performed based on the intra prediction mode described above. Meanwhile, post-processing filtering may be performed on the derived prediction sample when necessary.

Specifically, the intra prediction procedure may include an intra prediction mode/type determination step, a neighboring reference sample derivation step, and an intra prediction mode/type-based prediction sample derivation step.

Additionally, a post-filtering step may be performed on the derived prediction sample when necessary.

Meanwhile, in addition to the intra prediction types described above, affine linear weighted intra prediction (ALWIP) may be used. The ALWIP may also be referred to as linear weighted intra prediction (LWIP) or matrix weighted intra prediction or matrix-based intra prediction (MIP). When MIP is applied to a current block, prediction samples for the current block may be derived by i) using neighboring reference samples on which an averaging procedure has been performed, ii) performing a matrix-vector multiplication procedure, and iii) further performing a horizontal/vertical interpolation procedure when necessary. Intra prediction modes used for MIP may be configured differently from those used in LIP, PDPC, MRL, ISP intra prediction, or normal intra prediction described above. The intra prediction mode for MIP may be referred to as the MIP intra prediction mode, MIP prediction mode, or MIP mode. For example, the matrix and offset used in the matrix-vector multiplication may be set differently depending on the intra prediction mode for MIP. Here, the matrix may be referred to as (MIP) weight matrix, and the offset may be referred to as the (MIP) offset vector or (MIP) bias vector. A specific MIP method will be described later.

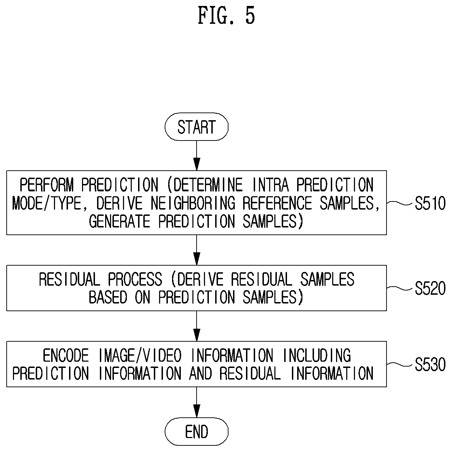

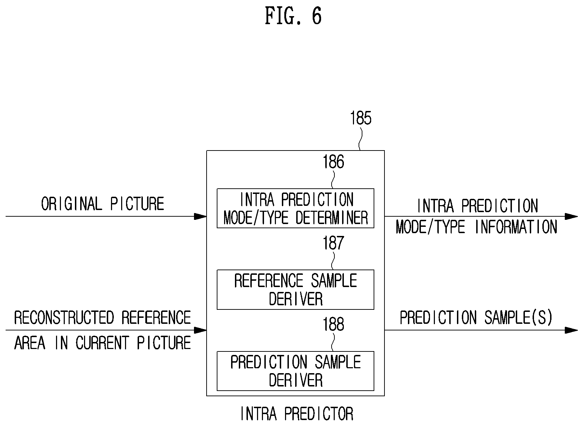

The block reconstruction procedure based on intra prediction and the intra predictor in the encoding apparatus will be described later with reference to FIG. 5 and FIG. 6.

FIG. 5 is a flowchart showing an intra prediction-based video/image encoding method.

The encoding method of FIG. 5 may be performed by the image encoding apparatus 100 of FIG. 2. Specifically, step S510 may be performed by the intra predictor 185, and step S520 may be performed by the residual processor. Specifically, step S520 may be performed by the subtractor 115. Step S530 may be performed by the entropy encoder 190. The prediction information in step S530 may be derived by the intra predictor 185, and the residual information in step S530 may be derived by the residual processor. The residual information refers to information about the residual samples. The residual information may include information on the quantized transform coefficients of the residual samples. As described above, the residual samples are derived as transform coefficients through the transformer 120 of the image encoding apparatus 100, and the transform coefficients may be derived as quantized transform coefficients through the quantizer 130. The information on the quantized transform coefficients may be encoded in the entropy encoder 190 through the residual coding process.

The image encoding apparatus 100 may perform intra prediction for the current block S510. The image encoding apparatus 100 may determine the intra prediction mode/type for the current block, may derive neighboring reference samples of the current block, and may generate prediction samples within the current block based on the intra prediction mode/type and the neighboring reference samples. Here, the processes of determining the intra prediction mode/type, deriving the neighboring reference samples, and generating the prediction samples may be performed simultaneously, or one process may be performed before another.

FIG. 6 shows an exemplary diagram of the configuration of an intra predictor 185 according to the present disclosure.

As shown in FIG. 6, the intra predictor 185 of the image encoding apparatus 100 may include an intra prediction mode/type determiner 186, a reference sample deriver 187, and/or a prediction sample deriver 188. The intra prediction mode/type determiner 186 may determine the intra prediction mode/type for the current block. The reference sample deriver 187 may derive the neighboring reference samples of the current block. The prediction sample deriver 188 may derive the prediction samples of the current block. Meanwhile, although not illustrated, when the prediction sample filtering process which will be described later is performed, the intra predictor 185 may further include a prediction sample filter (not shown).

The image encoding apparatus 100 may determine the intra prediction mode/type applied to the current block among a plurality of intra prediction modes/types. The image encoding apparatus 100 may compare the rate-distortion costs (RD cost) of the intra prediction modes/types and may determine the optimal intra prediction mode/type for the current block.

Meanwhile, the image encoding apparatus 100 may perform a prediction sample filtering process. Prediction sample filtering may be referred to as post-filtering. Through the prediction sample filtering process, some or all of the prediction samples may be filtered. In some cases, the prediction sample filtering process may be omitted.

Referring again to FIG. 5, the image encoding apparatus 100 may generate residual samples for the current block based on the prediction samples or the filtered prediction samples S520. The image encoding apparatus 100 may derive the residual samples by subtracting the prediction samples from the original samples of the current block. In other words, the image encoding apparatus 100 may derive residual sample value by subtracting the corresponding prediction sample value from the original sample value.

The image encoding apparatus 100 may encode image information including information about the intra prediction (prediction information) and residual information about the residual samples S530. The prediction information may include intra prediction mode information and/or intra prediction method information. The image encoding apparatus 100 may output the encoded image information in the form of a bitstream. The output bitstream may be transmitted to the image decoding apparatus 200 through a storage medium or a network.

The residual information may include a residual coding syntax, which will be described later. The image encoding apparatus 100 may derive quantized transform coefficients by transforming/quantizing the residual samples. The residual information may include information on the quantized transform coefficients.

Meanwhile, as described above, the image encoding apparatus 100 may generate a reconstructed picture (including reconstructed samples and reconstructed block). The image encoding apparatus 100 may perform dequantization/inverse transform on the quantized transform coefficients to derive (modified) residual samples. The reason for applying dequantization/inverse transform after transform/quantization of the residual samples is to derive the residual samples identical to the residual samples derived in the image decoding apparatus 200. The image encoding apparatus 100 may generate a reconstructed block including reconstructed samples for the current block based on the prediction samples and the (modified) residual samples. A reconstructed picture for the current picture may be generated based on the reconstructed block. As described above, an in-loop filtering process may further be applied to the reconstructed picture.

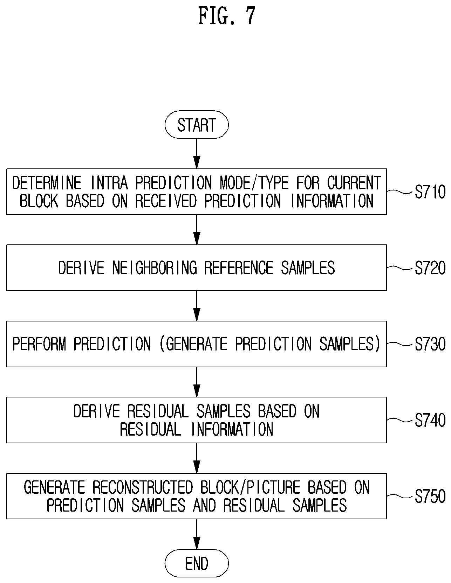

FIG. 7 is a flowchart showing an intra prediction-based video/image decoding method.

The image decoding apparatus 200 may perform operations corresponding to the operations performed in the image encoding apparatus 100.

The decoding method in FIG. 7 may be performed by the image decoding apparatus 200 in FIG. 3. Steps S710 to S730 may be performed by the intra predictor 265, and the prediction information in step S710 and the residual information in step S740 may be obtained from the bitstream by the entropy decoder 210. The residual processor of the image decoding apparatus 200 may derive residual samples for the current block based on the residual information S740. Specifically, the dequantizer 220 of the residual processor may perform dequantization on the quantized transform coefficients derived based on the residual information to obtain transform coefficients, and the inverse transformer 230 of the residual processor may perform inverse transform on the transform coefficients to derive residual samples for the current block. Step S750 may be performed by the adder 235 or the reconstructor.

Specifically, the image decoding apparatus 200 may derive the intra prediction mode/type for the current block based on the received prediction information (i.e., intra prediction mode/type information) S710. Additionally, the image decoding apparatus 200 may derive neighboring reference samples of the current block S720. The image decoding apparatus 200 may generate prediction samples within the current block based on the intra prediction mode/type and the neighboring reference samples S730. In this case, the image decoding apparatus 200 may perform a prediction sample filtering process. Prediction sample filtering may be referred to as post-filtering. Through this prediction sample filtering process, some or all of the prediction samples may be filtered. In some cases, the prediction sample filtering process may be omitted.

The image decoding apparatus 200 may generate residual samples for the current block based on the received residual information S740. The image decoding apparatus 200 may generate reconstructed samples for the current block based on the prediction samples and the residual samples and derive a reconstructed block that includes the reconstructed samples S750. A reconstructed picture for the current picture may be generated based on the reconstructed block. As described above, an in-loop filtering process may further be applied to the reconstructed picture.

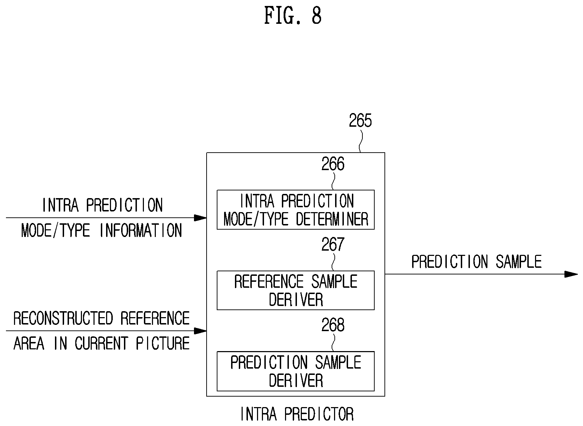

FIG. 8 shows an exemplary diagram of the configuration of an intra predictor 265 according to the present disclosure.

As shown in FIG. 8, the intra predictor 265 of the image decoding apparatus 200 may include an intra prediction mode/type determiner 266, a reference sample deriver 267, and a prediction sample deriver 268. The intra prediction mode/type determiner 266 may determine the intra prediction mode/type for the current block based on the intra prediction mode/type information generated in the intra prediction mode/type determiner 186 of the image encoding apparatus 100 and signaled, and the reference sample deriver 266 may derive neighboring reference samples of the current block from the reconstructed reference area in the current picture. The prediction sample deriver 268 may derive prediction samples of the current block. Meanwhile, although not illustrated, when the above-described prediction sample filtering process is performed, the intra predictor 265 may further include a prediction sample filter (not shown).

The intra prediction mode information may include, for example, flag information (i.e., intra_luma_mpm_flag) indicating whether the most probable mode (MPM) is applied to the current block or the remaining mode is applied, and when the MPM is applied to the current block, the intra prediction mode information may further include index information (i.e., intra_luma_mpm_idx) indicating one of the intra prediction mode candidates (MPM candidates). The intra prediction mode candidates (MPM candidates) may be configured as an MPM candidate list or an MPM list. Additionally, when the MPM is not applied to the current block, the intra prediction mode information may further include remaining mode information (i.e., intra_luma_mpm_remainder) indicating one of the remaining intra prediction modes excluding the intra prediction mode candidates (MPM candidates). The image decoding apparatus 200 may determine the intra prediction mode of the current block based on the intra prediction mode information.

Additionally, the intra prediction method information may be implemented in various forms. As an example, the intra prediction method information may include intra prediction method index information indicating one of the intra prediction methods. As another example, the intra prediction method information may include at least one of reference sample line information (i.e., intra_luma_ref_idx) indicating whether the MRL is applied to the current block and, when the MRL is applied, which reference sample line is used, ISP flag information (i.e., intra_subpartitions_mode_flag) indicating whether the ISP is applied to the current block, ISP type information (i.e., intra_subpartitions_split_flag) indicating a split type of subpartitions when the ISP is applied, flag information indicating whether PDPC is applied, or flag information indicating whether LIP is applied. Additionally, the intra prediction type information may include a MIP flag indicating whether MIP is applied to the current block. In the present disclosure, the ISP flag information may be referred to as an ISP application indicator.

The intra prediction mode information and/or the intra prediction method information may be encoded/decoded through the coding method described in the present disclosure. For example, the intra prediction mode information and/or the intra prediction method information may be encoded/decoded through entropy coding (i.e., CABAC, CAVLC) based on truncated (rice) binary code.

Meanwhile, in addition to PLANAR mode, DC mode, and directional intra prediction modes, the intra prediction mode may further include a cross-component linear model (CCLM) mode for chroma sample. The CCLM mode may be classified into L_CCLM, T_CCLM, and LT_CCLM depending on whether left samples, top samples, or both are considered for deriving CCLM parameter, and it may be applied only to chroma component.

The intra prediction mode, for example, may be indexed as shown in Table 5 below.

[Table 5]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, or MIP described above. The intra prediction type may be indicated based on intra prediction type information, and the intra prediction type information may be implemented in various forms. As an example, the intra prediction type information may include an intra prediction type index that indicates one of the intra prediction types. In another example, the intra prediction type information may include at least one of reference sample line information (i.e., intra_luma_ref_idx) indicating whether MRL is applied to the current block and, when MRL is applied, which reference sample line is used, an ISP flag information (i.e., intra_subpartitions_mode_flag) indicating whether ISP is applied to the current block; ISP type information (i.e., intra_subpartitions_split_flag) indicating the partitioning type of subpartitions when ISP is applied, a flag information indicating whether PDPC is applied, or a flag information indicating whether LIP is applied. Additionally, the intra prediction type information may include an MIP flag (which may be referred to as intra_mip_flag) indicating whether MIP is applied to the current block.

### Overview of Template based intra mode derivation (TIMD)

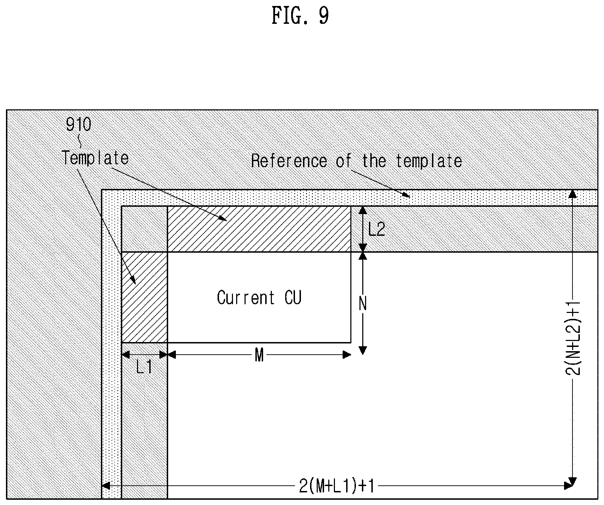

FIG. 9 is a diagram showing a template region and a reference sample used for TIMD according to the present disclosure. TIMD may be a mode that selects a mode with the smallest SATD as the intra mode of a current block by calculating the Sum of Absolute Transformed Differences (SATD) between a prediction block predicted from a template region 910 and an actual reconstructed sample for the intra prediction mode (IPM) intra mode of a neighboring adjacent intra block and inter block.

In a TIMD mode, for each intra prediction mode in most probable modes (MPMs), SATD between prediction samples and reconstructed samples may be calculated. Two modes with the smallest SATD may be selected as TIMD modes. These two TIMD modes may be fused by using weights, and this weighted intra prediction may be used to encode a current CU. Position dependent intra prediction combination (PDPC) may be used to derive TIMD modes.

The error (cost) of two selected prediction modes may be compared with a threshold value, and error factor 2 may be applied to this comparison as in Equation 1.

$$【Equation\ 1】$$

$$costMode2 < 2*costMode1$$

Here, costMode1 may refer to the mode with the smallest SATD. Additionally, costMode2 may refer to the mode with the second smallest SATD.

When a condition in Equation 1 is satisfied, a final prediction block may be generated by fusing prediction blocks generated by using two modes. Otherwise, the final prediction block may be generated using only the mode with the smallest SATD value.

A weighting ratio applied when fusing prediction blocks generated by using two prediction modes with the smallest SATD may be as shown in Equation 2 below.

$$【Equation\ 2】$$

$$weight1 = costMode2/(costMode1 + costMode2)$$

$$weight2 = 1 - weight1$$

Here, weight1 may refer to the weight applied to the prediction block generated based on the mode with the smallest SATD. Additionally, weight2 may refer to the weight applied to the prediction block generated based on the mode with the second smallest SATD.

### Overview of Decoder-side intra mode derivation (DIMD)

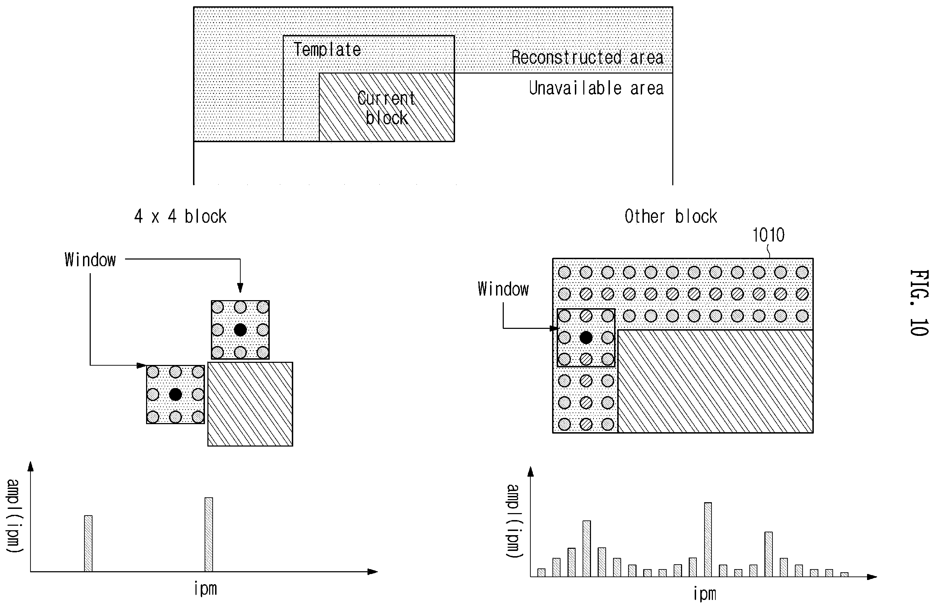

FIG. 10 is a diagram showing a method for constructing a HoG in a DIMD mode.

The DIMD mode according to the present disclosure may derive intra prediction mode information from the image encoding apparatus 100 and the image decoding apparatus 200 and use it, without directly transmitting it. The DIMD mode may be performed by obtaining horizontal gradient and vertical gradient from the second neighboring reference column and row adjacent to the current block and constructing a HoG based on them.

Referring to FIG. 10, a HoG may be obtained by applying a Sobel filter using an L-shaped column and row of three neighboring pixels 1010 around the current block. In this case, when the boundary of the block exists in different CTUs, the neighboring pixels of the current block may not be used for texture analysis.

Meanwhile, a Sobel filter may be referred to as a Sobel operator and may be an efficient filter for detecting edges. When using a Sobel filter, two types of Sobel filters, Sobel filter for the vertical direction and Sobel filter for the horizontal direction, may be used.

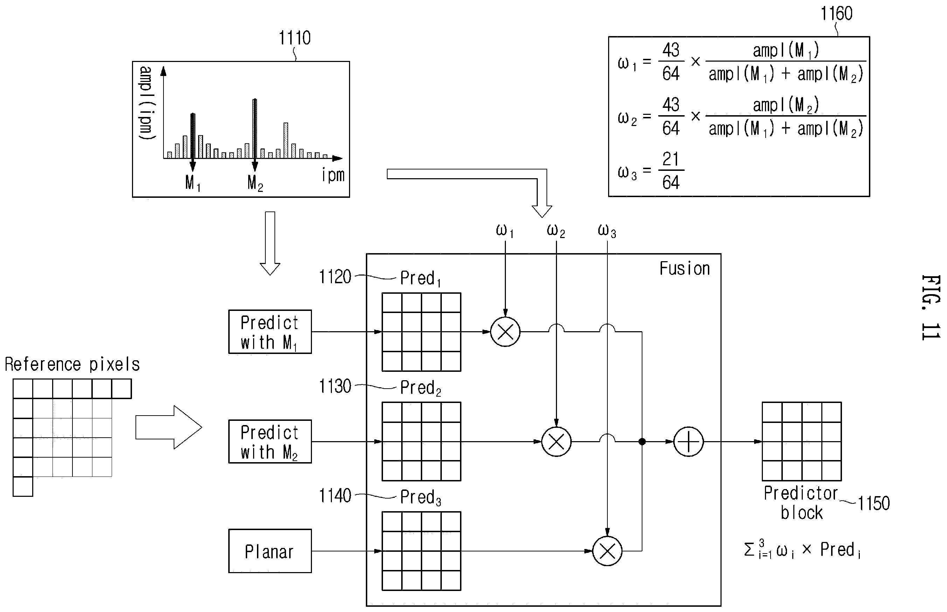

FIG. 11 is a diagram showing a method for constructing a prediction block when applying a DIMD mode. According to FIG. 11, the DIMD mode may be performed by selecting two intra modes with the highest histogram amplitude 1110 and constructing a final prediction block 1150 by blending the prediction blocks predicted by two selected intra modes (1120, 1130) and the prediction block predicted by planar mode (1040). In this case, the weight applied when blending the prediction blocks may be derived from the histogram amplitude 1160. Additionally, a DIMD flag may be transmitted on a block unit to determine whether DIMD is used.

### DIMD Chroma Mode (DIMD in chroma)

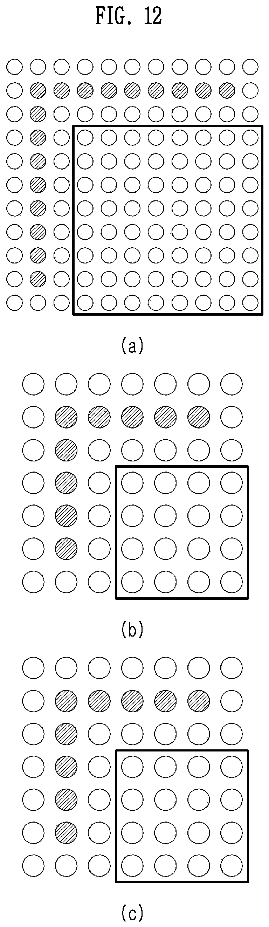

A DIMD chroma mode, as in FIG. 12, may use a DIMD derivation method to derive the chroma intra prediction mode of a current block based on the neighboring reconstructed Y (filled samples in FIG. 12(a)), Cb (filled samples in FIG. 12(b)) and Cr (filled samples in FIG. 12(c)) samples of the second neighboring row and column.

Specifically, in order to construct a HoG, a horizontal gradient and a vertical gradient may be calculated for each reconstructed luma sample placed together with a current chroma block as well as reconstructed Cb and Cr samples. The chroma intra prediction of a current chroma block may be performed by using an intra prediction mode with the largest histogram amplitude value.

When an intra prediction mode derived from a DIMD chroma mode is the same as an intra prediction mode derived from a DM mode, an intra prediction mode with the second largest histogram amplitude value may be used as a DIMD chroma mode. A CU level flag may be signaled to show whether a DIMD chroma mode is applied.

### CIIP (combined inter and intra prediction)

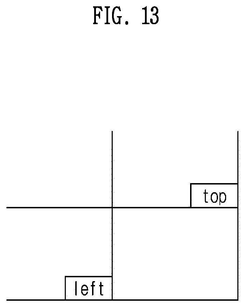

A CIIP mode may be applied to a current block. An additional flag (ex. ciip_flag) may be signaled to show whether a CIIP mode is applied to a current CU. For example, when a CU is coded in a merge mode, the additional flag may be signaled if a CU includes at least 64 luma samples (i.e., the product of a CU width and a CU height is greater than or equal to 64) and both the width and the height of a CU are less than 128 luma samples. As indicated by that name, CIIP prediction may combine an inter prediction signal and an intra prediction signal. The inter prediction signal of CIIP mode P_inter may be derived by using the same inter prediction process as that applied to a general merge mode. Intra prediction signal P_intra may be derived through a regular intra prediction process using a planar mode. Then, intra and inter prediction signals may be combined by using a weighted average, wherein a weight value may be calculated as follows according to the coding mode of the top and left neighboring blocks (refer to FIG. 13).

When a top neighboring block is available and intra-coded, isIntraTop is configured as 1, and otherwise, isIntraTop is configured as 0;

When a left neighboring block is available and intra-coded, isIntraLeft is configured as 1, and otherwise, isIntraLeft is configured as 0;

When (isIntraTop + isIntraLeft) is equal to 2, wt is configured as 2, and otherwise, wt is configured as 1.

CIIP prediction may be constructed as in Equation 3.

【Equation 3】

$$P_{\mathrm{CIIP}} = \left((4 - wt) * P_{inter} + wt * P_{intra} + 2\right) \gg 2$$

$P_{\mathrm{CIIP}}$ may represent a prediction block by CIIP prediction, $P_{inter}$ may represent a prediction block by inter prediction, and $P_{intra}$ may represent a prediction block by intra prediction.

In a CIIP mode, prediction samples may be generated by applying a weight to an inter prediction signal predicted by using a CIIP template matching (TM) merge candidate and an intra prediction signal predicted by using a TIMD derived from an intra prediction mode. This method may be applied only to a coding block having a region equal to or less than 1024.

This TIMD derivation method may be used to derive an intra prediction mode in CIIP. Specifically, an intra prediction mode with the smallest SATD value in a TIMD mode list is selected, and this intra prediction mode may be mapped to one of the 67 regular intra prediction modes.

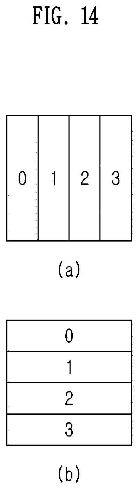

In addition, when a derived intra prediction mode is an angular mode, weights (wIntra, wInter) for two cases below may be modified. For adjacent horizontal modes (2 <= angular mode index < 34), a current block may be partitioned in a vertical direction as in FIG. 14(a). For adjacent vertical modes (34 <= angular mode index <= 66), a current block may be partitioned in a horizontal direction as in FIG. 14 (b) .

Weights (wIntra, wInter) for different sub-blocks are shown in Table 6.

[Table 4]

| The sub-block index | (wIntra, wInter) |
|---|---|
| 0 | (6, 2) |
| 1 | (5, 3) |
| 2 | (3, 5) |
| 3 | (2, 6) |

When CIIP-TM is used, a CIIP-TM merge candidate list for a CIIP-TM mode may be constructed. Merge candidates may be refined through template matching. CIIP-TM merge candidates may also be reordered into regular merge candidates through an ARMC method. The maximum number of CIIP-TM merge candidates may be 2.

### Embodiment

The present invention relates to a non-separable primary transform/inverse transform method and a device thereof. Embodiments proposed in the present invention may be applied to the existing video compression technologies including versatile video coding (VVC), and may also be used in connection with next-generation video coding technologies.

"Transform" mentioned in the present invention may refer to transform performed by an image encoding device 100 or inverse transform performed by an image decoding device 200. In other words, in the following description, "transform" may be used in a meaning including inverse transform. In addition, "non-separable primary transform (NSPT)" mentioned in the present invention may refer to non-separable primary transform performed by an image encoding device 100 or non-separable primary inverse transform performed by an image decoding device 200. In other words, in the following description, "non-separable primary transform" may be used in a meaning including non-separable primary inverse transform. Embodiments mentioned in the following description may be performed by an image encoding device 100 and an image decoding device 200.

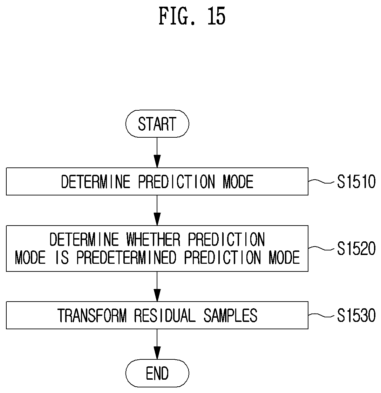

FIG. 15 is a flowchart representing an image encoding/decoding method according to an embodiment of the present disclosure.

Referring to FIG. 15, the prediction mode of a current block may be determined S1510. The prediction mode of a current block may be referred to as "a mode for prediction of a current block" or "a mode used for prediction of a current block", etc.

Whether the prediction mode of a current block is a predetermined prediction mode may be determined S1520. A predetermined prediction mode may include at least one of a MIP mode and a mixed prediction mode. A mixed prediction mode may be a mode that derives the prediction block of a current block based on neighboring samples around a current block. For example, a mixed prediction mode may include at least one of a TIMD mode, a DIMD mode, a DIMD chroma mode or a CIIP mode.

Residual samples for a current block may be transformed S1530. The transform of residual samples may be performed based on whether the prediction mode of a current block is a predetermined prediction mode. In addition, the transform of residual samples may be performed based on a prediction mode to which the prediction mode of a current block corresponds among the prediction modes corresponding to a predetermined prediction mode.

## Embodiment 1

A method for transforming residual samples from a spatial domain to a frequency domain through predefined transform may be largely divided into separable transform and non-separable transform.

In general, since an image pixel is a value (a pixel value or a sample value) existing in a two-dimensional (a position with horizontal and vertical coordinates) space, a transform process that changes it to another domain (e.g., a frequency domain) by using predefined basis vectors may be performed. For separable transform, since each transform in a horizontal direction and in a vertical direction is performed independently, a transform coefficient is obtained through the inner product between each of a horizontal input value and a vertical input value and base vectors, so computational complexity required may be relatively smaller compared to non-separable transform. For non-separable transform, in order to identify the overall characteristics of pixel values existing in a two-dimensional space, the inner product between a size corresponding to the total number of pixels existing in a two-dimensional space and basis vectors (or kernels) must be applied, so a kernel size required may be larger and computational complexity may be higher compared to separable transform. However, since non-separable transform may express a similarity existing between pixels on a two-dimensional space very well, greatly improved encoding efficiency may be provided.

Separable transform and non-separable transform are intended to efficiently transmit the energy of a residual signal through a mathematical method, transform (into a frequency domain), in order to ultimately identify the characteristics of a residual signal well and express it effectively. In general, a residual signal (which may be referred to as a residual block when encoding is performed in a block unit) refers to a difference between an original image block and a predicted image block, and a predicted image block is generated as an intra prediction block by using the values of neighboring pixels that are already decoded for intra mode prediction. Accordingly, when a directionality-based intra prediction mode such as a conventional video compression method is used, the characteristics of a prediction block are formed similarly according to the directionality of an intra prediction mode, which has the same effect on the characteristics of a residual block. Accordingly, the statistical characteristics of a residual image are affected according to the prediction mode of a given block. For example, For a block using a horizontal intra prediction mode, since a prediction mode block copies and uses a pixel value in a horizontal direction, a residual image has the distribution characteristics of a residual pixel value with a pattern similar to that of a prediction block. When a similar intra prediction mode is used even for a different image, a characteristic that is commonly shared each other remains in a residual image, and a primary transform technology is to improve encoding efficiency by using basis vectors (kernels) that reflect this characteristic well.

In the present invention, in order to use primary transform more efficiently based on the characteristics of a residual signal, which is a difference between a predicted pixel used for primary transform and a pixel value existing in an original image, embodiments regarding interaction between primary transform and coding tools using a different prediction mode.

Embodiment 1 is an embodiment of a method for transforming residual samples based on whether the prediction mode of a current block is a MIP mode corresponding to a predetermined prediction mode.

As an example, when the prediction mode of a current block is a MIP mode, non-separable primary transform may not be applied. A block encoded in a MIP mode (a MIP mode block) may have a residual characteristic different from that of a block not encoded in a MIP mode (a non-MIP mode block) due to a difference in a prediction method. Accordingly, in order to improve coding efficiency or reduce computational complexity, non-separable primary transform may be omitted for a MIP mode block. In this case, a non-separable primary transform-related syntax element (a non-separable primary transform flag or/and a non-separable primary transform index, etc.) may not be signaled/parsed for a MIP mode block. This method may correspond to a method for specifying that additional information about a non-separable primary transform technology is coded after additional information about a MIP coding technology.

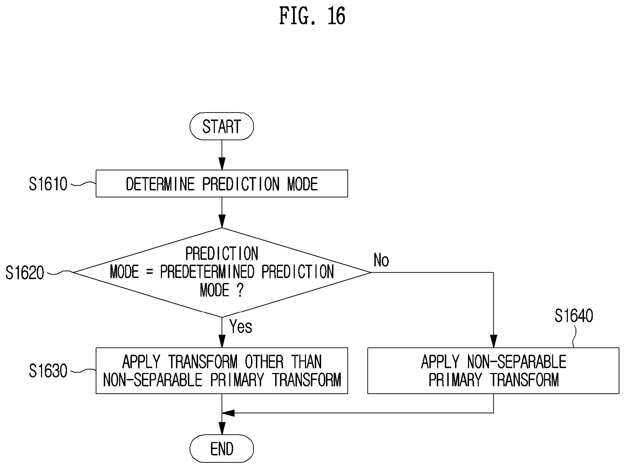

A flowchart for a method in which non-separable primary transform is not applied when the prediction mode of a current block is a MIP mode is shown in FIG. 16.

Referring to FIG. 16, after the prediction mode of a current block is determined S1610, whether the prediction mode of a current block is a predetermined prediction mode (a MIP mode) may be determined S1620. When the prediction mode of a current block is not a MIP mode, non-separable primary transform and/or separable primary transform may be applied to the residual block of a current block S1640. In other words, when the prediction mode of a current block is not a MIP mode, both transform other than non-separable primary transform and non-separable primary transform may be applied. In contrast, when the prediction mode of a current block is a MIP mode, non-separable primary transform is not applied and transform other than non-separable primary transform may be applied S1630.

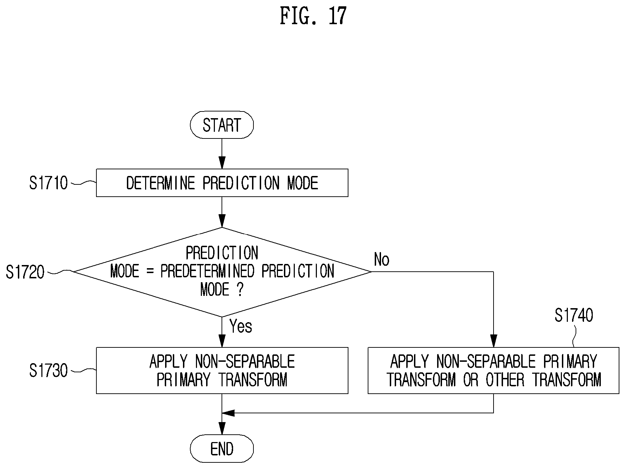

As another example, non-separable primary transform may be applied even when the prediction mode of a current block is a predetermined prediction mode (a MIP mode). A flowchart for a method in which non-separable primary transform is applied when the prediction mode of a current block is a MIP mode is shown in FIG. 17.

Referring to FIG. 17, after the prediction mode of a current block is determined S1710, whether the prediction mode of a current block is a predetermined prediction mode (a MIP mode) may be determined S1720. When the prediction mode of a current block is not a MIP mode, non-separable primary transform and/or separable primary transform may be applied to the residual block of a current block S1740. In other words, when the prediction mode of a current block is not a MIP mode, both transform other than non-separable primary transform and non-separable primary transform may be applied. In contrast, when the prediction mode of a current block is a MIP mode, non-separable primary transform may be applied S1730.

When non-separable primary transform is applied to a MIP mode block, a transform set may be allocated according to a predetermined rule. In other words, a transform set used for the non-separable primary transform of residual samples may be determined as a transform set candidate corresponding to a predetermined intra mode among the transform set candidates. Here, a predetermined intra mode may be a planar mode or a DC mode. For example, when a transform set is derived through an intra prediction mode in non-separable primary transform, the intra prediction mode of a MIP mode block may be allocated as a planar mode, through which a transform set may be derived. When this method is applied, some or all of the syntax elements such as a non-separable primary transform flag, a non-separable primary transform index, etc. may not be signaled/parsed for a MIP mode block, so coding efficiency may be improved.

When non-separable primary transform is applied to a MIP mode block, a transform kernel used for the non-separable primary transform of residual samples may be determined as a transform kernel corresponding to a MIP mode. Here, a transform kernel corresponding to a MIP mode is a kernel trained separately through MIP mode information, and may be a kernel different from kernels in a transform kernel set described above. In other words, when non-separable primary transform is applied to a MIP mode block, a kernel trained separately through MIP mode information may be allocated to a transform kernel used for non-separable primary transform. Since a MIP mode block has a different residual characteristic from a non-MIP mode block due to a difference in a prediction method, a separately trained kernel may be efficient. When this method is used, some or all of the syntax elements such as a non-separable primary transform flag, a non-separable primary transform index, etc. do not need to be signaled/parsed for a MIP mode block, so coding efficiency may be improved.

When non-separable primary transform is applied to a MIP mode block, a transform set used for the non-separable primary transform of residual samples may be determined based on information of neighboring samples adjacent to a current block among the transform set candidates. The information of neighboring samples may be information of all/some samples adjacent to the top/left of a current block. For example, when a transform set is derived through an intra prediction mode in non-separable primary transform, the directionality of residual samples may be determined by analyzing the information of neighboring samples, an intra prediction mode suitable therefor may be allocated, and a transform set corresponding to the directionality of residual samples may be derived. When this method is used, some or all of the syntax elements such as a non-separable primary transform flag, a non-separable primary transform index, etc. do not need to be signaled/parsed for a MIP mode block, so coding efficiency may be improved.

When non-separable primary transform is applied to a MIP mode block, a transform set used for non-separable primary transform may be determined based on a plurality of MIP prediction mode information (a plurality of MIP prediction modes). A plurality of MIP prediction mode information may be 'intra prediction modes used for MIP' described above. For example, a different non-separable primary transform set may be derived for each of a plurality of MIP prediction modes, or a different non-separable primary transform set may be derived in a unit of a group in which a plurality of MIP prediction modes are grouped. When this method is used, some or all of the syntax elements such as a non-separable primary transform flag, a non-separable primary transform index, etc. do not need to be signaled/parsed for a MIP mode block, so coding efficiency may be improved. The number of a plurality of MIP prediction modes may be variably determined according to the size of a block, and a non-separable primary transform set derived in a unit of a plurality of MIP prediction modes or a unit of a group may also be variably determined according to the size of a block.

## Embodiment 2

As a primary transform method from a spatial domain to a frequency domain, there may be a method for always applying only separable transform, a method for always applying only non-separable transform, a method for applying one of separable transform and non-separable transform, and a method for applying both separable transform and non-separable transform. Here, a separable transform-based primary transform method may include DCT type 2, DST type 7, DCT type 8, DCT type 5, DST type 4, DST type 1, IDT (identity transform), or other transforms that are not based on non-separable transform (e.g., a transform skip), etc.

Embodiment 2 is an embodiment of a method for transforming residual samples based on whether the prediction mode of a current block is a mixed prediction mode corresponding to a predetermined prediction mode.

As an example, when the prediction mode of a current block is a mixed prediction mode, non-separable primary transform may not be applied. A block encoded in various types of mixed prediction modes other than a single intra mode (a mixed prediction mode block) may have a different residual characteristic from a block not encoded in a mixed prediction mode (a non-mixed prediction mode block) due to a difference in a prediction method. Accordingly, in order to improve coding efficiency or reduce computational complexity, non-separable primary transform may be omitted for a mixed prediction mode block. In this case, a non-separable primary transform-related syntax element (a non-separable primary transform flag or/and a non-separable primary transform index, etc.) may not be signaled/parsed for a mixed prediction mode block. This method may correspond to a method for specifying that additional information about a non-separable primary transform technology is coded after additional information about a mixed prediction mode.

A flowchart for a method in which non-separable primary transform is not applied when the prediction mode of a current block is a mixed prediction mode is shown in FIG. 16.

Referring to FIG. 16, after the prediction mode of a current block is determined S1610, whether the prediction mode of a current block is a predetermined prediction mode (a mixed prediction mode) may be determined S1620. When the prediction mode of a current block is not a mixed prediction mode, non-separable primary transform and/or separable primary transform may be applied to the residual block of a current block S1640. In other words, when the prediction mode of a current block is not a mixed prediction mode, both transform other than non-separable primary transform and non-separable primary transform may be applied. In contrast, when the prediction mode of a current block is a mixed prediction mode, non-separable primary transform is not applied and transform other than non-separable primary transform may be applied S1630.

As another example, non-separable primary transform may be applied even when the prediction mode of a current block is a predetermined prediction mode (a mixed prediction mode). A flowchart for a method in which non-separable primary transform is applied when the prediction mode of a current block is a mixed prediction mode is shown in FIG. 17.

Referring to FIG. 17, after the prediction mode of a current block is determined S1710, whether the prediction mode of a current block is a predetermined prediction mode (a mixed prediction mode) may be determined S1720. When the prediction mode of a current block is not a mixed prediction mode, non-separable primary transform and/or separable primary transform may be applied to the residual block of a current block S1740. In other words, when the prediction mode of a current block is not a mixed prediction mode, both transform other than non-separable primary transform and non-separable primary transform may be applied. In contrast, when the prediction mode of a current block is a mixed prediction mode, non-separable primary transform may be applied S1730.

When non-separable primary transform is applied to a mixed prediction mode block, a transform set may be allocated according to a predetermined rule. In other words, a transform set used for the non-separable primary transform of residual samples may be determined as a transform set candidate corresponding to a predetermined intra mode among the transform set candidates. Here, a predetermined intra mode may be a planar mode or a DC mode. For example, when a transform set is derived through an intra prediction mode in non-separable primary transform, the intra prediction mode of a mixed prediction mode block may be allocated as a planar mode or a DC mode, through which a transform set may be derived. When this method is applied, some or all of the syntax elements such as a non-separable primary transform flag, a non-separable primary transform index, etc. may not be signaled/parsed for a mixed prediction mode block, so coding efficiency may be improved.

When non-separable primary transform is applied to a mixed prediction mode block, a transform kernel used for the non-separable primary transform of residual samples may be determined as a transform kernel corresponding to a mixed prediction mode. Here, a transform kernel corresponding to a mixed prediction mode is a kernel trained separately through mixed prediction mode information, and may be a kernel different from kernels in a transform kernel set described above. In other words, when non-separable primary transform is applied to a mixed prediction mode block, a kernel trained separately through mixed prediction mode information may be allocated to a transform kernel used for non-separable primary transform. Since a mixed prediction mode block has a different residual characteristic from a non-mixed prediction mode block due to a difference in a prediction method, a separately trained kernel may be efficient. When this method is used, some or all of the syntax elements such as a non-separable primary transform flag, a non-separable primary

**EP 4 604 540 A1**

transform index, etc. do not need to be signaled/parsed for a mixed prediction mode block, so coding efficiency may be improved.

When non-separable primary transform is applied to a mixed prediction mode block, a transform set used for the non-separable primary transform of residual samples may be determined based on the information of neighboring samples adjacent to a current block among the transform set candidates. The information of neighboring samples may be information of all/some samples adjacent to the top/left of a current block. For example, when a transform set is derived through an intra prediction mode in non-separable primary transform, the directionality of residual samples may be determined by analyzing the information of neighboring samples, an intra prediction mode suitable therefor may be allocated, and a transform set corresponding to the directionality of residual samples may be derived. When this method is used, some or all of the syntax elements such as a non-separable primary transform flag, a non-separable primary transform index, etc. do not need to be signaled/parsed for a mixed prediction mode block, so coding efficiency may be improved.

When non-separable primary transform is applied to a mixed prediction mode block, the number of non-separable primary transform sets (the number of transform set candidates used for non-separable primary transform) and the number of transform kernels in each set (the number of transform kernels included in each transform set candidate) may be configured differently according to additional information derived from a mixed prediction step (information derived from a mixed prediction mode). For example, when a mixed prediction mode is a DIMD mode, a HoG may be constructed through information of neighboring pixels, and two intra modes may be selected in the order of large histogram amplitudes. In this case, the number of transform set candidates and the number of transform kernels in each transform set may be determined based on a difference between the values of two selected intra modes. Specifically, when a difference between the values of selected intra modes is greater than or equal to a certain value, n1 transform sets and k1 transform kernels may be configured. If a difference between the values of selected intra modes is less than or equal to a certain value, n2 transform sets and k2 transform kernels may be configured.

When non-separable primary transform is applied to a mixed prediction mode block, a transform set used for non-separable primary transform may be determined based on additional information derived from a mixed prediction step (information derived from a mixed prediction mode). For example, when a mixed prediction mode is a DIMD mode, a HoG may be constructed through information of neighboring pixels, and two intra modes may be selected in the order of large histogram amplitudes. In this case, a transform set may be determined by using an intra mode having the largest histogram amplitude among the two selected intra modes. In a different embodiment, a transform set used for non-separable primary transform may also be determined based on intra prediction mode information derived from a mixed prediction step. For example, when a mixed prediction mode is a TIMD mode, an intra prediction mode targeted for a mixed prediction mode is derived by using the pixel information of a neighboring template region, and in this process, when a difference between a neighboring reconstructed template region and a template region predicted from the neighboring pixels of a template region satisfies a specific condition, an intra prediction mode may not be mixed and a single intra prediction mode may be used. In this case, a transform set may be determined based on a single intra prediction mode derived from the process, and a determined transform set may be the same as a transform set used in case of an intra prediction mode for a block that is not a mixed prediction mode.

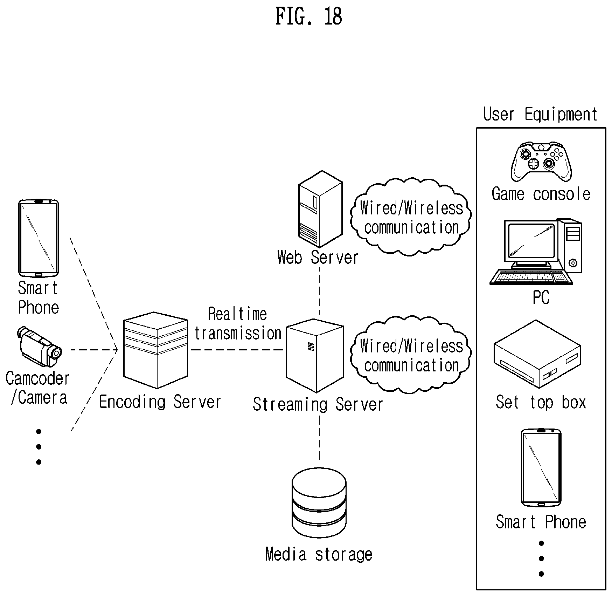

FIG. 18 shows an exemplary diagram of a content streaming system to which an embodiment of the present disclosure may be applied.

As shown in FIG. 18, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the image encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

21

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

   determining a prediction mode of a current block;
   determining whether the prediction mode of the current block is a predetermined prediction mode; and
   transforming residual samples for the current block,
   wherein the predetermined prediction mode includes at least one of a matrix based intra prediction (MIP) mode or a mixed prediction mode, and
   wherein the mixed prediction mode is a mode that derives a prediction block based on neighboring samples.

2. The method of Claim 1, wherein based on the prediction mode of the current block being the predetermined prediction mode, a non-separable primary transform is not applied to the residual samples.

3. The method of Claim 1, wherein based on the prediction mode of the current block being the predetermined prediction mode, a transform set used for a non-separable primary transform of the residual samples is determined as a transform set candidate corresponding to a predetermined intra mode among transform set candidates.

4. The method of Claim 3, wherein the predetermined intra mode is a planar mode or a DC mode.

5. The method of Claim 1, wherein based on the prediction mode of the current block being the predetermined prediction mode, a transform set used for a non-separable primary transform of the residual samples is determined based on information of neighboring samples adjacent to the current block among transform set candidates.

6. The method of Claim 5, wherein a directionality of the residual samples is derived from the information of the neighboring samples, and
   wherein the transform set used for the non-separable primary transform is determined as a transform set candidate corresponding to the directionality of the residual samples among the transform set candidates.

7. The method of Claim 1, wherein based on the prediction mode of the current block being the MIP mode, a transform set used for a non-separable primary transform is determined for each of MIP mode candidates for the current block, or is determined for each of groups where the MIP mode candidates are grouped.

8. The method of Claim 1, wherein based on the prediction mode of the current block being the mixed prediction mode, a number of transform set candidates used for a non-separable primary transform and a number of transform kernels included in each transform set candidate are determined based on information derived from the mixed prediction mode.

9. The method of Claim 8, wherein based on the prediction mode of the current block being a decoder side intra mode derivation (DIMD) mode, the number of the transform set candidates and the number of the transform kernels are determined based on a difference between intra modes derived from the DIMD mode.

10. The method of Claim 1, wherein based on the prediction mode of the current block being the mixed prediction mode, a transform set used for a non-separable primary transform is determined based on information derived from the mixed prediction mode.

11. The method of Claim 10, wherein based on the prediction mode of the current block being a DIMD mode, the transform set is determined based on an intra mode derived from the DIMD mode.

12. The method of Claim 1, wherein based on the prediction mode of the current block being the predetermined prediction mode, a transform kernel used for a non-separable primary transform of the residual samples is determined as a transform kernel corresponding to the predetermined prediction mode.

13. An image encoding method performed by an image encoding apparatus, comprising:

   determining a prediction mode of a current block;
   determining whether the prediction mode of the current block is a predetermined prediction mode; and
   transforming residual samples for the current block,
   wherein the predetermined prediction mode includes at least one of a matrix based intra prediction (MIP) mode or a mixed prediction mode, and
   wherein the mixed prediction mode is a mode that derives a prediction block based on neighboring samples.

14. A method for transmitting a bitstream generated by an image encoding method, the image encoding method comprising:

   determining a prediction mode of a current block;
   determining whether the prediction mode of the current block is a predetermined prediction mode; and
   transforming residual samples for the current block,
   wherein the predetermined prediction mode includes at least one of a matrix based intra prediction (MIP) mode or a mixed prediction mode, and
   wherein the mixed prediction mode is a mode that derives a prediction block based on neighboring samples.

15. A computer-readable storage medium storing a bitstream generated by the image encoding method in Claim 13.

# FIG.1

# FIG.2

FIG.3

## FIG.4

16 input coefficients for 4x4 forward LFNST
64 input coefficients for 8x8 forward LFNST

Forward low-frequency
non-separable transform

411

Forward
Primary
Transform

413

Quantization

bitstream

Inverse
Primary
Transform

423

Inverse low-frequency
non-separable transform

De-
Quantization

421

8 input coefficients for 4x4 inverse LFNST
16 input coefficients for 8x8 inverse LFNST

# FIG. 5

```
                    ( START )
                        │
                        ▼
┌────────────────────────────────────────────────┐
│ PERFORM PREDICTION (DETERMINE INTRA PREDICTION  │
│ MODE/TYPE, DERIVE NEIGHBORING REFERENCE SAMPLES,│──S510
│ GENERATE PREDICTION SAMPLES)                    │
└────────────────────────────────────────────────┘
                        │
                        ▼
┌────────────────────────────────────────────────┐
│ RESIDUAL PROCESS (DERIVE RESIDUAL SAMPLES       │──S520
│ BASED ON PREDICTION SAMPLES)                    │
└────────────────────────────────────────────────┘
                        │
                        ▼
┌────────────────────────────────────────────────┐
│ ENCODE IMAGE/VIDEO INFORMATION INCLUDING        │──S530
│ PREDICTION INFORMATION AND RESIDUAL INFORMATION │
└────────────────────────────────────────────────┘
                        │
                        ▼
                    ( END )
```

FIG. 6

185

186

ORIGINAL PICTURE

INTRA PREDICTION
MODE/TYPE DETERMINER

INTRA PREDICTION
MODE/TYPE INFORMATION

187

REFERENCE SAMPLE
DERIVER

RECONSTRUCTED REFERENCE
AREA IN CURRENT PICTURE

PREDICTION SAMPLE(S)

188

PREDICTION SAMPLE
DERIVER

INTRA PREDICTOR

FIG. 7

START

DETERMINE INTRA PREDICTION MODE/TYPE FOR CURRENT BLOCK BASED ON RECEIVED PREDICTION INFORMATION ~ S710

DERIVE NEIGHBORING REFERENCE SAMPLES ~ S720

PERFORM PREDICTION (GENERATE PREDICTION SAMPLES) ~ S730

DERIVE RESIDUAL SAMPLES BASED ON RESIDUAL INFORMATION ~ S740

GENERATE RECONSTRUCTED BLOCK/PICTURE BASED ON PREDICTION SAMPLES AND RESIDUAL SAMPLES ~ S750

END

FIG. 8

265

266

INTRA PREDICTION
MODE/TYPE INFORMATION →

INTRA PREDICTION
MODE/TYPE DETERMINER

267

REFERENCE SAMPLE
DERIVER

→ PREDICTION SAMPLE

RECONSTRUCTED REFERENCE
AREA IN CURRENT PICTURE →

268

PREDICTION SAMPLE
DERIVER

INTRA PREDICTOR

FIG. 9

## FIG. 10

FIG. 11

## FIG. 12

(a)

(b)

(c)

FIG. 13

FIG. 14

(a)

(b)

## FIG. 15

```
          ( START )
              │
              ▼
┌──────────────────────────────────┐
│     DETERMINE PREDICTION MODE     │──S1510
└──────────────────────────────────┘
              │
              ▼
┌──────────────────────────────────┐
│     DETERMINE WHETHER PREDICTION  │
│  MODE IS PREDETERMINED PREDICTION MODE │──S1520
└──────────────────────────────────┘
              │
              ▼
┌──────────────────────────────────┐
│    TRANSFORM RESIDUAL SAMPLES     │──S1530
└──────────────────────────────────┘
              │
              ▼
          (  END  )
```

FIG. 16

START

S1610 — DETERMINE PREDICTION MODE

S1620 — PREDICTION MODE = PREDETERMINED PREDICTION MODE ?

No

Yes

S1630 — APPLY TRANSFORM OTHER THAN NON-SEPARABLE PRIMARY TRANSFORM

S1640

APPLY NON-SEPARABLE PRIMARY TRANSFORM

END

FIG. 17

```
                        ┌──────────┐
                        │  START   │
                        └────┬─────┘
                             │
                             ▼
S1710 ──┌─────────────────────────────────────┐
        │    DETERMINE PREDICTION MODE         │
        └──────────────────┬──────────────────┘
                           │
                           ▼
                  ╱────────────────────╲
                 ╱    PREDICTION         ╲          No
S1720 ──────────  MODE = PREDETERMINED PREDICTION  ──────────┐
                 ╲       MODE ?           ╱                  │
                  ╲────────────────────╱                     │
                           │ Yes                             │   S1740
                           ▼                                 ▼
S1730 ──┌──────────────────────────┐    ┌────────────────────────────────┐
        │  APPLY NON-SEPARABLE      │    │  APPLY NON-SEPARABLE PRIMARY    │
        │  PRIMARY TRANSFORM        │    │  TRANSFORM OR OTHER TRANSFORM   │
        └────────────┬─────────────┘    └───────────────┬────────────────┘
                     │◄─────────────────────────────────┘
                     ▼
                ┌─────────┐
                │   END   │
                └─────────┘
```

FIG. 18

## INTERNATIONAL SEARCH REPORT

| International application No. |
| --- |
| **PCT/KR2023/015682** |

| A. | CLASSIFICATION OF SUBJECT MATTER |
| --- | --- |

**H04N 19/60**(2014.01)i; **H04N 19/11**(2014.01)i; **H04N 19/132**(2014.01)i; **H04N 19/70**(2014.01)i; **H04N 19/176**(2014.01)i

According to International Patent Classification (IPC) or to both national classification and IPC

| B. | FIELDS SEARCHED |
| --- | --- |

Minimum documentation searched (classification system followed by classification symbols)

H04N 19/60(2014.01); H04N 19/11(2014.01); H04N 19/132(2014.01); H04N 19/159(2014.01); H04N 19/176(2014.01); H04N 19/50(2014.01); H04N 19/61(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 예측(predict), 모드(mode), 잔차(residual), 변환(transform), MIP(matrix based intra prediction), 혼합(mix), 주변(neighbor)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0154157 A (BEIJING BYTEDANCE NETWORK TECHNOLOGY CO., LTD. et al.) 20 December 2021 (2021-12-20)<br>See paragraphs [0042]-[0043], [0076], [0112], [0126], [0137], [0170], [0175], [0187]-[0190], [0244], [0257] and [0269]. | 1,13-15 |
| Y | | 2-12 |
| Y | CHOI, Jung-Ah et al. AHG12: A study on non-separable primary transform. JVET-AA0064-v2, Joint Video Experts Team (JVET) of ITU-T SG 16 WP 3 and ISO/IEC JTC 1/SC 29, 27th Meeting, by teleconference. pp. 1-3, 13 July 2022.<br>See pages 1-2. | 2-12 |
| Y | KR 10-2022-0124802 A (TENCENT AMERICA LLC) 14 September 2022 (2022-09-14)<br>See claim 1. | 5-6 |
| Y | US 2019-0215521 A1 (MEDIATEK INC.) 11 July 2019 (2019-07-11)<br>See paragraphs [0013], [0015] and [0065]. | 9-11 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **05 January 2024** | **22 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/015682** |

## C. DOCUMENTS CONSIDERED TO BE RELEVANT

| Category* | Citation of document, with indication, where appropriate, of the relevant passages | Relevant to claim No. |
| --- | --- | --- |
| X | US 2022-0232241 A1 (LEMON INC.) 21 July 2022 (2022-07-21)<br>See paragraphs [0051]-[0052], [0083]-[0090], [0137], [0146] and [0149]; and figures 3 and 19. | 1,13-15 |

Form PCT/ISA/210 (second sheet) (July 2022)

### INTERNATIONAL SEARCH REPORT
**Information on patent family members**

International application No.

**PCT/KR2023/015682**

| Patent document cited in search report | | | Publication date (day/month/year) | Patent family member(s) | | | Publication date (day/month/year) |
|---|---|---|---|---|---|---|---|
| KR | 10-2021-0154157 | A | 20 December 2021 | CN | 113728641 | B | 15 September 2023 |
| | | | | CN | 116896634 | A | 17 October 2023 |
| | | | | EP | 3939282 | A1 | 19 January 2022 |
| | | | | JP | 2023-103327 | A | 26 July 2023 |
| | | | | JP | 7277608 | B2 | 19 May 2023 |
| | | | | US | 2022-0295061 | A1 | 15 September 2022 |
| | | | | WO | 2020-216288 | A1 | 29 October 2020 |
| KR | 10-2022-0124802 | A | 14 September 2022 | CN | 115769575 | A | 07 March 2023 |
| | | | | EP | 4078958 | A1 | 26 October 2022 |
| | | | | JP | 2023-520197 | A | 16 May 2023 |
| | | | | US | 2022-0201334 | A1 | 23 June 2022 |
| | | | | WO | 2022-139935 | A1 | 30 June 2022 |
| US | 2019-0215521 | A1 | 11 July 2019 | WO | 2018-054269 | A1 | 29 March 2018 |
| US | 2022-0232241 | A1 | 21 July 2022 | CN | 114765685 | A | 19 July 2022 |
| | | | | US | 11290736 | B1 | 29 March 2022 |

Form PCT/ISA/210 (patent family annex) (July 2022)